# EUROPEAN PATENT SPECIFICATION

(11) **EP 1 209 382 B1**
(45) Date of publication and mention of the grant of the patent: **14.07.2004**
(21) Application number: 01127189.7
(22) Date of filing: 16.11.2001
(51) Int. Cl.: F16H 63/30

(54) **Motion reversing device for a selection and shifting control in a gearbox for motor vehicles**
Bewegungsumkehrvorrichtung für Gangwahl- und Schaltsteuerung in einem Kraftfahrzeuggetriebe
Dispositif d'inversion de mouvement d'un dispositif de sélection et changement de vitesse pour véhicule automobile

(30) Priority: 22.11.2000 IT TO001092
(43) Date of publication of application: 29.05.2002
(73) Proprietor: FIAT AUTO S.p.A., 10135 Torino (IT)
(72) Inventor: Gatti, Giovanni, 80010 Villaricca (Napoli) (IT); Pastorello, Valter, 10040 Cumiana (Torino) (IT)
(74) Representative: Di Francesco, Gianni

(56) References cited:
- EP-A- 0 197 008
- EP-A- 0 501 845
- US-A- 4 605 109
- US-A- 4 608 877

## Description

The present invention relates to a motion reversing device of the selection and shifting shaft in a gearbox for motor vehicles.

Due to space problems, currently designed gearboxes with more than five speed, present two transmission shaft instead of a single one. This solution allows shorter shifting yet it can present other problems, such as the need to reverse the sliding of one or more shifting forks.

The reversal of motion in a selection and shifting device, which is a need already known from different kind of gearboxes, as from EP 0 501 645, is generally achieved by means of a motion reversing device of the scale type which, anyway, requires additional space inside the gearbox.

It is an object of the present invention to provide such a motion reversing device of the selection and shifting shaft for gearboxes which does not need any additional space inside the gearbox thus overcoming the inconveniences of the previous art.

This object is achieved by means of a motion reversing device of the selection and shifting schaft in a mechanical multispeed gearbox presenting the characteristics set forth in claim 1.

Additional advantages and characteristics will become more clear from the following description which refers to the appended drawings provided as non-restrictive example and in which:

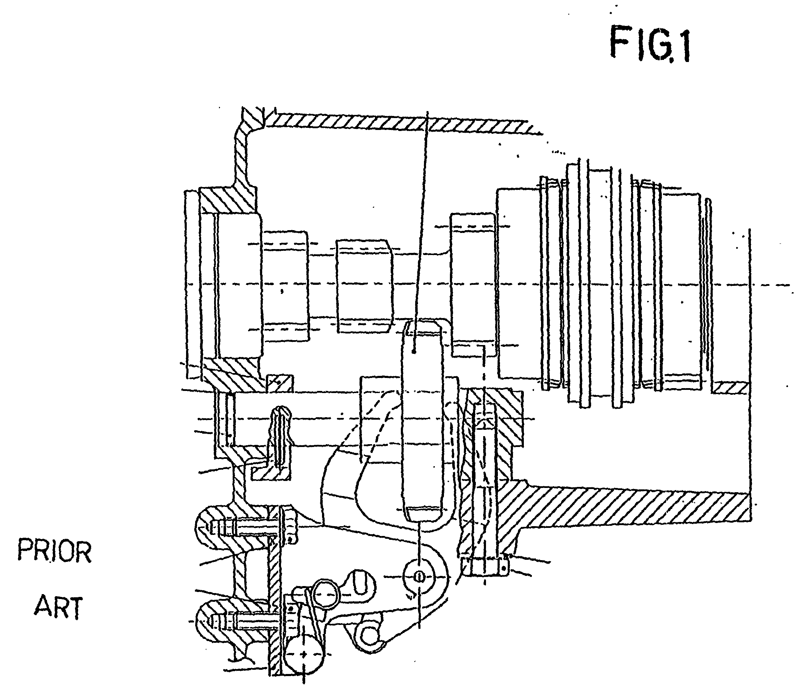

figure 1 is a side view, partially sectioned, of a reversing gear control device of the known art mounted on a mechanical gearbox;
figure 2 is a side sectional view along the axis of the selection and shifting shaft in a mechanical gearbox for motor vehicles, provided with the motion reversing device according to the invention;
figure 3 is a partial sectional view at the height of the upper drum bolt 9 in figure 2, and
figure 4 is a partial sectional view at the height of the lower drum bolt 9 in figure 2.

With reference to the figures, and more in particular to figures from 2 to 4, a case of a mechanical gearbox for motor vehicles is shown, which is presenting a main shaft 2 moved by the motor by means of the clutch and two transmission shafts 3 and 4 which alternately transmit the motion to the wheels through the necessary means, the differential and the axle shafts among them.

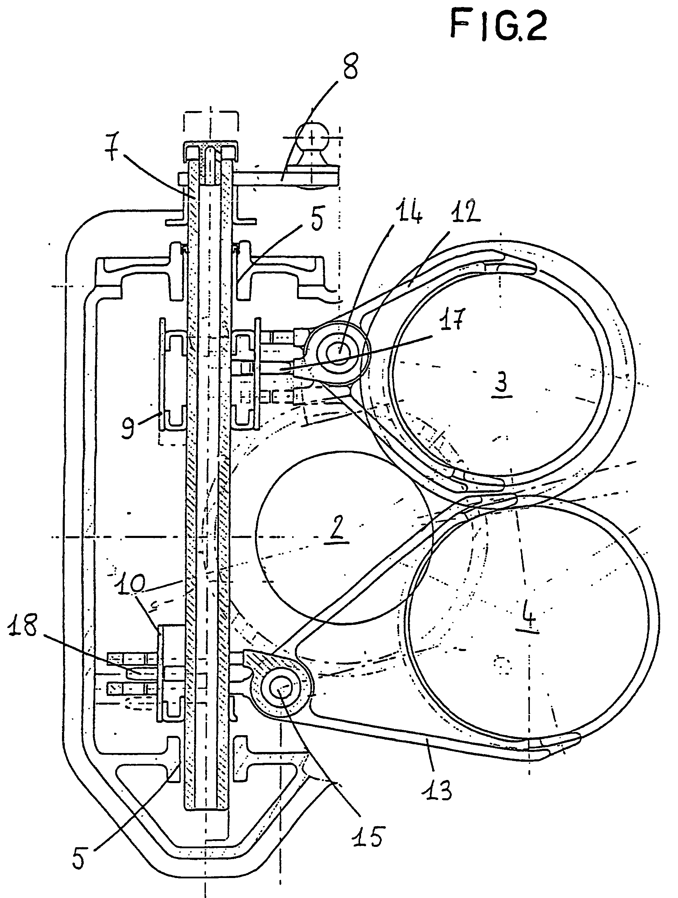

In the case 1, in special seats 5 made in the wall of the case itself, there is inserted a control shaft for selection and shifting 7, controlled by an arm 8 and provided with two drum bolts 9 and 10, upper and lower respectively, of a known type and therefore not described in detail. These bolts are adapted to block the movement of the upper and lower shifting fork, 12 and 13 respectively, which are not engaged in the gearbox in the very shifting relating each time to a single fork, for instance, the upper fork 12 of the third speed in figure 2.

Forks 12 and 13 translate on a pair of rods, upper rod 14 and lower rod 15 respectively, being pushed by a corresponding radial control upper finger 17 and lower finger 18, integral with and protruding from each one of the two drum bolts 9 and 10. The upper control finger 17 is adapted to get inserted into a seat 20 of proper outline made in the teeth 21 of each upper fork 12. Each upper tooth presents also two fingers which, if not in correspondence with the holes 24 made on the bolt, do not allow the movement of the forks which have not been selected (and the teach of which do not correspond with the finger) since they rest on the external wall of the bolt 9.

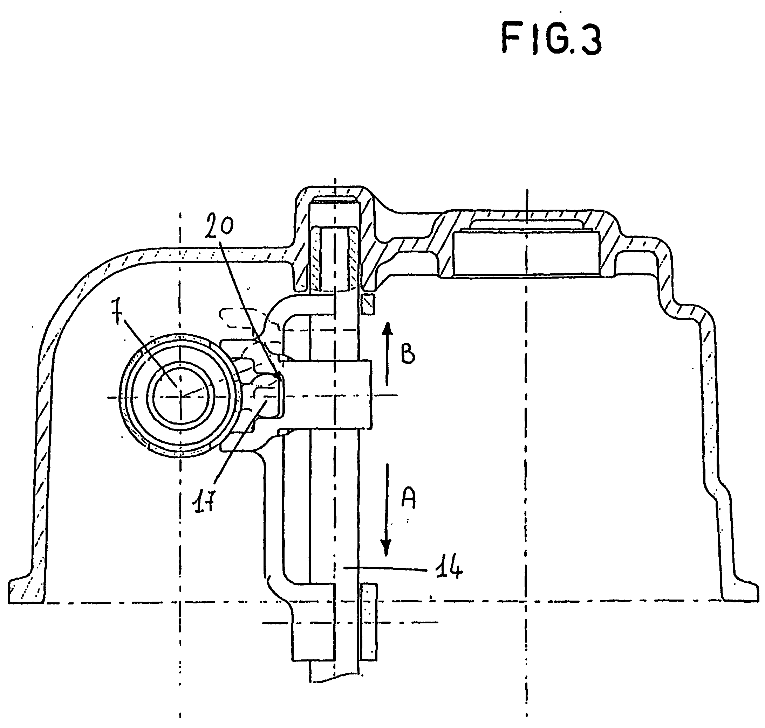

The clockwise rotation of the selection and shifting shaft 7 dragging the upper finger 17 that selected the tooth 21 of the fork for the 3^{rd} and 4^{th} speed (figures 2 and 3) will move said fork towards the right side according to the arrow A (fig.3) so that a shifting to the desired speed is achieved. The counterclokwise rotation of the shaft 7 will make the selected fork slide towards the left side according to the arrow B (figure 3) so that a shifting to the other speed controlled by said fork is achieved.

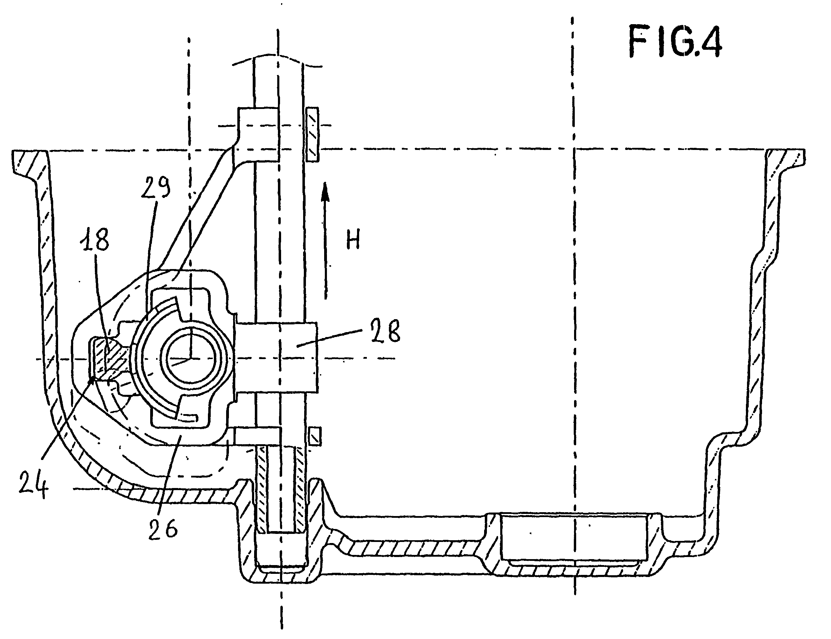

As already stated before, production reasons require that in this type of gearbox with two transmission shafts, in case the shifting control makes the shaft 7 rotate clockwise, the translation direction of the forks selected by the lower finger 18 of the second bolt must have a direction opposite to that of the forks selected by the upper finger 17 and therefore towards the left according to the arrow H (figure 4). In order to achieve this result, the lower finger 18 according to the invention is oriented in a direction which is diametrically opposite to that of the upper finger 17 and gets engaged into a seat 24 made in a basically annular protuberance 26 which each lower tooth 28 of the lower forks 13 is provided with.

While in use the lower bolt of the shaft 7 passes through the hole of the ring 28 and in the case here shown (figure 4) it presents only the part of the drum provided with the slots 29 at the sides of the finger 18, which during the translation of the fork selected by the finger 18 allow the access of the projections 30 which are inside the ring 26 and which have the same functions as the fingers and the teeth 21 of the upper forks.

By means of the device here described it is possible to achieve the desired effect without having to increase the space inside the gearbox.

The outline of the control finger and that of the ring which is part of the tooth of each fork can be varied according to the manufacturing needs for the gearbox where these elements are placed without going beyond the scope of the present invention as claimed.

## Claims

1. Motion reversing device of the selection and shifting shaft in a mechanical multispeed gearbox, including a main shaft (2) and two transmission shafts (3, 4), said selection and shifting shaft (7) being provided with two drum bolts (9, 10) placed the one on top of the other, in correspondence with a pair of rods adapted to support the sliding of the control forks of the speed gears; each one of said bolts being provided of a radial finger (17, 18) protruding from the drum and adapted to get engaged into a seat (20, 24) of proper profile made on the teeth of the control forks (12, 13) in order to make them translate as a consequence of a rotation of the selection and shifting shaft, **characterised in that** the control finger (18) of one of the bolts is located in a position which is diametrically opposite to that of the finger (17) of the other bolt and that the tooth of each fork (13) controlled by said finger is provided with a basically annular projection (26) inside which the seat (24) to engage said finger is made.

2. Device as claimed in claim 1, **characterised in that** the bolt (10) passes inside the annular projection.

3. Device as claimed in claims 1 and 2, **characterised in that** the drum part of the bolt passing inside the annular projection is adjacent to the control finger (18)

4. Device as claimed in claim 1, **characterised in that** inside the annular projection there are projections (29) adapted to get engaged with the surface of the drum of the bolt (10) when the corresponding tooth (28) is not engaged with the control finger.

## Patentansprüche

1. Bewegungsumkehrvorrichtung der Wahl- und Schaltwelle in einem mechanischen Mehrganggetriebe, enthaltend eine Hauptwelle (2) und zwei Vorgelegewellen (3, 4), wobei die Wahl- und Schaltwelle (7) mit zwei Schaltwalzen [drum bolts] (9, 10) ausgestattet ist, die übereinander angeordnet sind, entsprechend einem Paar Stangen, die zum Stützen des Verschiebens der Schaltgabeln der Gänge angepasst sind, wobei jede Walze mit einem radialen Finger (17, 18) versehen ist, der von der Walze vorsteht und in einen Sitz (20, 24) eines dazugehörigen Profils einrückbar ist, das auf den Zähnen der Schaltgabeln (12, 13) ausgebildet ist, um diese infolge einer Drehung der Wahl- und Schaltwelle zu verschieben, **dadurch gekennzeichnet, dass** der Schaltfinger (18) einer der Walzen in einer Position angeordnet ist, die der des Fingers (17) der anderen Walze diametral gegenüberliegt, und dass der Zahn jeder durch den Finger geschalteten Gabel (13) mit einer grundsätzlich ringförmigen Auskragung (26) versehen ist, in welcher der Sitz (24) ausgebildet ist, um mit dem Finger in Eingriff zu gelangen.

2. Vorrichtung nach Anspruch 1, **dadurch gekennzeichnet, dass** die Walze (10) in die ringförmige Auskragung reicht.

3. Vorrichtung nach den Ansprüchen 1 und 2, **dadurch gekennzeichnet, dass** der Trommelteil der Walze, der in die ringförmige Auskragung reicht, neben dem Schaltfinger (18) liegt.

4. Vorrichtung nach Anspruch 1, **dadurch gekennzeichnet, dass** innerhalb der ringförmigen Auskragung Vorsprünge (29) vorhanden sind, die in die Walzenoberfläche der Schaltwalze (10) einrückbar sind, wenn der entsprechende Zahn (28) nicht mit dem Schaltfinger in Eingriff ist.

## Revendications

1. Dispositif d'inversion de mouvement de l'arbre de sélection et de changement de rapport dans une boîte de vitesses mécanique à plusieurs vitesses, comprenant un arbre principal (2) et deux arbres de transmission (3, 4), ledit arbre de sélection et de changement de rapport (7) étant muni de deux verrous à tambour (9, 10) placés l'un au-dessus de l'autre, en correspondance avec une paire de tiges conçues pour supporter le coulissement des fourchettes de commande des rapports de vitesse, chacun desdits verrous étant muni d'un doigt radial (17, 18) dépassant du tambour et conçu pour venir s'engager dans un siège (20, 24) à profil approprié réalisé sur les dents des fourchettes de commande (12, 13), de manière à leur faire effectuer un mouvement de translation à la suite d'une rotation de l'arbre de sélection et de changement de rapport, **caractérisé en ce que** le doigt de commande (18) de l'un des verrous est disposé dans une position qui est diamétralement opposée à celle du doigt (17) de l'autre verrou, et **en ce que** la dent de chaque fourchette (13) commandée par ledit doigt est munie d'une saillie principalement annulaire (26) à l'intérieur de laquelle est réalisé le siège (24) destiné à recevoir ledit doigt.

2. Dispositif selon la revendication 1, **caractérisé en ce que** le verrou (10) passe à l'intérieur de la saillie annulaire.

3. Dispositif selon les revendications 1 et 2, **caractérisé en ce que** la partie tambour du verrou passant à l'intérieur de la saillie annulaire est adjacente au doigt de commande (18).

4. Dispositif selon la revendication 1, **caractérisé en ce qu'**à l'intérieur de la partie annulaire, se trouvent des saillies (29) conçues pour devenir engagées avec la surface du tambour du verrou (10) lorsque la dent correspondante (28) n'est pas engagée par le doigt de commande.
